# EUROPÄISCHE PATENTSCHRIFT

(11) **EP 3 825 601 B1**
(45) Veröffentlichungstag und Bekanntmachung des Hinweises auf die Patenterteilung: **29.10.2025**
(21) Anmeldenummer: 20208405.9
(22) Anmeldetag: 18.11.2020
(51) Int. Cl.: F21S 43/15, F21S 43/14, F21S 43/19, F21S 43/20, F21S 43/31, F21S 43/40, F21S 43/50, B60Q 1/28, B60Q 1/00

(54) **LICHTELEMENT FÜR EIN KRAFTFAHRZEUG UND KRAFTFAHRZEUG**
LIGHT ELEMENT FOR A MOTOR VEHICLE AND MOTOR VEHICLE
ÉLÉMENT LUMINEUX POUR UN VÉHICULE AUTOMOBILE ET VÉHICULE AUTOMOBILE

(30) Priorität: 25.11.2019 DE 102019131817
(43) Veröffentlichungstag der Anmeldung: 26.05.2021
(73) Patentinhaber: Audi AG, 85045 Ingolstadt (DE)
(72) Erfinder: Funke, Carsten, 85051 Ingolstadt (DE); Hamm, Michael, 72800 Eningen (DE)
(74) Vertreter: Hofstetter, Schurack & Partner

(56) Entgegenhaltungen:
- EP-A1- 3 196 550
- EP-A1- 3 388 742
- WO-A1-2017/216019
- WO-A1-2018/069082
- WO-A1-2018/069453
- WO-A1-2018/087072
- DE-A1- 4 101 418
- US-A1- 2017 023 192

## Beschreibung

Die Erfindung betrifft ein Lichtelement für ein Kraftfahrzeug und ein Kraftfahrzeug mit einem derartigen Lichtelement.

Licht- und Beleuchtungseinrichtungen finden bereits heutzutage im Automobilbereich in unterschiedlichen Ausgestaltungen vielfache Anwendung, etwa als Scheinwerfer, Innenraumbeleuchtung, Instrumentenbeleuchtung oder Ambientebeleuchtung. Zum Beleuchten oder Hinterleuchten einzelner Elemente werden in heutigen Fahrzeugen beispielsweise Lichtleiter zum seitlichen Einkoppeln oder Diffusorscheiben eingesetzt. Damit sind jedoch eine Reihe von Nachteilen verbunden, wie beispielsweise eine begrenzte Länge und relativ große minimale Krümmungsradien, was eine Nachbildung komplexer Strukturen erschwert, mögliche Farbverschiebungen und sehr begrenzte Möglichkeiten für dynamische Effekte mit Lichtleitern, da beispielsweise Animationen nicht praktikabel realisierbar sind. Hinterleuchtete Diffusorscheiben sind nachteilig aufgrund einer stets benötigten relativ großen Platinenfläche, typischerweise relativ teuer und bauraumintensiv sowie oftmals problematisch in Kombination mit Radar-Anwendungen und darüber hinaus ebenfalls ungeeignet für relativ stark gekrümmte Strukturen.

Aus der DE 10 2009 019 623 A1 ist eine Scheibenanordnung mit Beleuchtung bekannt. Am Rand der Scheibe ist dabei eine LED-Lichtleiste befestigt, die eine LED-Leiterplatte, eine LED, ein Anschlusskabel und eine Polymerummantelung der LED-Leiterplatte und des Anschlusskabels umfasst. An der Scheibe ist zudem ein Reflektor angebracht. Damit soll eine dichte und gleichzeitig flexible Befestigung der LED-Lichtleiste an der Scheibe ermöglicht werden.

Die DE 102018 211 056 A1 beschreibt eine Beleuchtungseinrichtung für ein Kraftfahrzeug, die ein Gehäuse mit einer Linse und einer Lichtquelle umfasst. Die Lichtquelle kann einen Leuchtfaden umfassen, wobei davon erzeugte Lichtstrahlen durch die Linse strahlen sollen.

Die WO 2018/069082 A1 offenbart eine Lichtanordnung für Kraftfahrzeuge, welche ein flexibles Lichtband aufweist. Dieses flexible Lichtband kann eine Vielzahl LED's aufweisen.

Die WO 2017/216019 A1 offenbart eine Leuchte für Fahrzeuge. Diese kann eine flexible Tragstruktur mit angeordneten Leuchtmitteln in der Form von Leuchtdioden aufweisen.

Die WO 2018/087072 A1 offenbart ein Verfahren zur Herstellung einer LED-Leucht-Anordnung. Diese kann ebenfalls flexibel ausgebildet sein.

Ferner offenbart die EP 3 196 550 A1 eine Beleuchtungsvorrichtung. Diese wird durch ein Bereitstellen eines geschützten länglichen lichtemittierenden Moduls, das ein Substrat mit mindestens einer elektrisch betriebenen Lichtstrahlungsquelle, z.B. einer LED-Quelle, und mindestens einer Dichtungsmasse, die die Lichtstrahlungsquelle(n) schützt, enthält, hergestellt. Des Weiteren wird diese durch ein Koppeln eines kanalförmigen Abdeckungselements mit einem Körperabschnitt, der lichtdurchlässiges Material enthält, mit dem lichtemittierenden Modul, hergestellt.

Aufgabe der vorliegenden Erfindung ist es, ein Lichtelement mit besonders einfachem und robustem Aufbau zu schaffen, das im Fahrzeugbereich vielseitig einsetzbar ist.

Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Figuren angegeben.

Das erfindungsgemäße Lichtelement ist für ein Kraftfahrzeug vorgesehen, kann also im Fahrzeugbau oder in der Fahrzeugausstattung, insbesondere - aber nicht nur - im Automobilbereich eingesetzt werden. Das Lichtelement kann dabei bevorzugt zur Beleuchtung, Hinterleuchtung, Einfassung oder Nachbildung von außenseitigen Elementen oder Strukturen des jeweiligen Kraftfahrzeugs verwendet werden. Das erfindungsgemäße Lichtelement kann aber entsprechend ebenso im Innenraum oder Innenbereich des Kraftfahrzeugs angeordnet und eingesetzt werden. Das erfindungsgemäße Lichtelement weist dazu eine Reihe von nebeneinander angeordneten LEDs (LED: lichtemittierende Diode, Leuchtdiode) und eine flexible Abdeckung auf, welche die LEDs unter Verzicht auf ein zwischen den LEDs und der Abdeckung angeordnetes strahlformendes optisches Element zumindest auf einer Lichtabstrahlseite der LEDs abdeckt. Es ist hier mit anderen Worten also vorgesehen, dass zwischen der Abdeckung und den LEDs beispielsweise keine Linse oder dergleichen angeordnet ist. Stattdessen kann die Abdeckung beispielsweise unmittelbar an den LEDs anlegen oder es kann sich zwischen der Abdeckung und den LEDs ein Luftspalt befinden. Die Abdeckung selbst ist hier ebenfalls nicht als strahlformendes optisches Element ausgebildet oder zu verstehen, ist also insbesondere keine Linse. Die Lichtabstrahlseite der LEDs ist diejenige Seite der LEDs oder LED-Chips, aus der im Betrieb der LEDs beziehungsweise des Lichtelements Licht austritt, also abgestrahlt wird.

Erfindungsgemäß ist es vorgesehen, dass das Lichtelement ein länglich erstrecktes, zumindest an einer Längsseite offenes Gehäuse aufweist. Dieses Gehäuse ist dabei aus einem flexiblen Kunststoffmaterial, beispielsweiseeinem Poly(organo)siloxan oder Silikon oder dergleichen gefertigt. In dem Gehäuse ist die Reihe der LEDs entlang einer Längserstreckungsrichtung des Gehäuses aufgenommen, wobei die Lichtabstrahlseite oder Lichtabstrahlrichtung der LEDs der offenen Längsseite des Gehäuses zugewandt ist. Die Abdeckung verschließt dabei die offene Längsseite des Gehäuses. Dadurch deckt die Abdeckung die LEDs, gegebenenfalls in Kombination mit dem Gehäuse, also ab oder schließt die LEDs ein. Damit sind die LEDs also insbesondere an allen Längsseiten des Lichtelements jeweils durch das Gehäuse und/oder die Abdeckung umgeben. Die Abdeckung kann die LEDs nur an der offenen Längsseite des Gehäuses oder an mehreren Seiten abdecken oder umgeben. Dementsprechend kann das Gehäuse nur auf der einen offenen Längsseite offen sein oder auf mehr als einer Längsseite offen sein, beispielsweise an zwei oder drei Längsseiten. Das Gehäuse kann mit anderen Worten also an drei Längsseiten oder lediglich an zwei Längsseiten oder nur an einer Längsseite Material aufweisen, im Extremfall also eine flexible Platte sein oder bilden, auf der die LEDs dann angeordnet sind. Bevorzugt kann das flexible Gehäuse aber einen Kanal bilden, in dem sowohl die Reihe der LEDs als auch die Abdeckung aufgenommen sind. Es kann ebenso möglich sein, dass das flexible Gehäuse und die flexible Abdeckung einstückig ausgebildet sind. Die LEDs können dann beispielsweise in ein entsprechendes flexibles Kunststoffmaterial eingelegt, eingesteckt oder eingegossen sein.

Weiter ist erfindungsgemäß die Abdeckung zum zumindest im Wesentlichen homogenen diffusen Streuen des von den LEDs abgestrahlten Lichts aus einem transluzenten Kunststoffmaterial gefertigt. Die Abdeckung beziehungsweise deren Kunststoffmaterial ist also trüb oder durchscheinend, insbesondere nicht klar. Dadurch erscheint eine Lichtverteilung oder Leuchtbeziehungsweise Strahldichte, die durch die mehreren nebeneinander angeordneten LEDs erzeugt wird, und dementsprechend eine außenseitige Oberfläche des Lichtelements beziehungsweise der Abdeckung zumindest im Wesentlichen homogen. Dies kann zumindest abschnittsweise oder bereichsweise für Abschnitte oder Bereiche gelten, die zwei oder mehr benachbarte LEDs umfassen. Zwischen mehreren derartigen Bereichen, also zwischen Gruppen oder Gruppierungen von LEDs können bei variablem Abstand der LEDs in der Längserstreckungsrichtung des Gehäuses, also entlang der Reihe der LEDs im Vergleich zu den LEDs einer Gruppe Lücken oder größere Abstände vorgesehen sein, in denen keine LEDs angeordnet sind und dementsprechend kein oder weniger Licht abgestrahlt wird.

Das erfindungsgemäße Lichtelement kann also als eine Vorrichtung oder Einrichtung zum Erzeugen eines Lichtbandes aufgefasst werden. Das Lichtelement kann vorteilhaft aufgrund der Flexibilität der Bauteile, insbesondere des Gehäuses und der Abdeckung, sowie dadurch, dass das Licht von den einzelnen LEDs punktuell ausgestrahlt wird und damit also nicht durch einen herkömmlichen Lichtleiter in Längserstreckungsrichtung des Gehäuses beziehungsweise des Lichtelements geleitet werden muss, vorteilhaft in komplexen Formen oder komplexen Freiform-Konturen folgend angeordnet oder verlegt werden. Dabei sind insbesondere kleinere Krümmungsradien möglich als beispielsweise mit herkömmlichen Lichtleitern.

Da die LEDs zudem einzelne Lichtquellen sind, werden im Vergleich zu herkömmlichen, Lichtleiter-basierten Leuchteinrichtungen vorteilhaft umfangreichere und komplexere dynamische Effekte, beispielsweise Animationen, ein entlang der Reihe der LEDs, segment-, abschnitts- oder gruppenweises Ein- und Ausschalten und/oder dergleichen mehr ermöglicht. Ein weiterer Vorteil besteht darin, dass das erfindungsgemäße Lichtelement in zumindest im Wesentlichen unbegrenzter Länge gefertigt werden kann, da entlang der Länge, also entlang der Längserstreckungsrichtung des Gehäuses der Reihe der LEDs keine Transport- oder Streuverluste von transportiertem Licht auftreten. Auch kann das erfindungsgemäße Lichtelement vorteilhaft robuster gegenüber mechanischen Beschädigungen sein als beispielsweise herkömmliche Lichtleiter, bei denen Oberflächenbeschädigungen zu funktionsverhindernden Streuverlusten führen können.

Diese Vorteile werden bei dem erfindungsgemäßen Lichtelement vorteilhaft mit einem besonders einfachen und robusten Aufbau erreicht. Insbesondere kann durch die Verwendung des diffusen transluzenten Kunststoffmaterial für die Abdeckung eine vorteilhafte, zumindest im Wesentlichen homogene Leuchtdichte beziehungsweise Strahldichte entlang der Oberfläche des Lichtelements unmittelbar, also ohne Verwendung zusätzlicher optischer Elemente wie etwa Linsen, Reflektoren oder dergleichen, erreicht werden. Die Abdeckung ist also multifunktional, da sie zudem die LEDs vor Beschädigung und Umwelteinflüssen schützt. Besonders vorteilhaft führt dabei eine Beschädigung der außenseitigen Oberfläche der Abdeckung in vielen Fällen nicht zu einem Funktionsverlust oder auch nur einer signifikanten Funktionseinschränkung des erfindungsgemäßen Lichtelements, da die Abdeckung beziehungsweise deren diffuses transluzentes Kunststoffmaterial seine Streu- oder Diffusionsfunktion in ihrem gesamten Volumen aufweist, also erfüllt oder ausübt. Dass das von den LEDs abgestrahlte Licht durch die Abdeckung zumindest im Wesentlichen homogen diffus gestreut wird, bedeutet, dass die Abdeckung beziehungsweise das Lichtelement insgesamt entsprechend zumindest im Wesentlichen als Lambert-Strahler arbeiteten oder aufgefasst werden kann.

Durch den besonders einfachen Aufbau des erfindungsgemäßen Lichtelements kann dieses besonders flexibel und vielseitig oder vielfältig eingesetzt werden. Beispielsweise ist eine Anordnung des erfindungsgemäßen Lichtelements im Bereich einer Radar-Sensorik typischerweise problemlos möglich, da das Lichtelement keine großen Platinen benötigt, die dies verhindern oder beeinträchtigen würden.

Stirnseiten des Lichtelements, die dieses an einem Anfang und einem Ende beispielsweise des Gehäuses und/oder der Abdeckung begrenzen, können durch das Gehäuse und/oder die Abdeckung oder ein jeweiliges anderes Bauteil oder Element, beispielsweise zur Energieversorgung oder Steuerung des Lichtelements, gebildet sein. Ebenso kann an wenigstens einer dieser Stirnseiten eine Anschluss- oder Versorgungsleitung zur Energieversorgung und/oder zur Steuerung oder Ansteuerung der LEDs hindurchgeführt, also aus dem Lichtelement herausgeführt sein, beispielsweise für einen Anschluss an ein Bordnetz des jeweiligen Kraftfahrzeugs.

Das erfindungsgemäße Lichtelement kann beispielsweise an einem Karosserieteil oder an einem sonstigen Fahrzeugteil angeordnet, also befestigt werden. Dazu können beispielsweise die unten beschriebenen Befestigungstechniken verwendet werden, die im Zusammenhang mit der Befestigung der LEDs in dem flexiblen Gehäuse beschrieben sind. Das Fahrzeugteil selbst kann dabei zumindest im Wesentlichen starr sein. Auch in diesem Fall kommen die Vorteile des erfindungsgemäßen Lichtelements aber zu Geltung.

Erfindungsgemäß ist vorgesehen, dass das Gehäuse eine Grundplatte sowie zwei sich senkrecht von dieser weg parallel zueinander erstreckende Seitenteile aufweist, und das Gehäuse zwei weitere Seitenteile aufweist, die sich ebenfalls parallel zueinander und zu den Seitenteilen entlang der Längserstreckungsrichtung des Lichtelements erstrecken, wobei die weiteren Seitenteile, zwischen denen sich die Abdeckung erstreckt, in Querrichtung innenseitig der Seitenteile angeordnet, und die weiteren Seitenteile sind ebenso wie die Reihe der LEDs mittels einer Befestigung an der Grundplatte gehalten sind.

In vorteilhafter Ausgestaltung der vorliegenden Erfindung beträgt ein Abstand zwischen jeweils zwei benachbarten LEDs zwischen 0,1 cm und 10 cm, bevorzugt weniger als 2 cm. Dieser Abstand ist dabei entlang der Reihe der LEDs, also in Längserstreckungsrichtung des Gehäuses und damit auch in Längserstreckungsrichtung des Lichtelements gemessen, also zu verstehen. Durch diese Anordnung der LEDs kann mit vertretbarem Materialaufwand für die Abdeckung erfahrungsgemäß eine ausreichend homogene Helligkeit an der Außenseite der Abdeckung erreicht werden. Wie bereits erwähnt, kann die hier vorgeschlagene Anordnung zumindest für jeweils eine Gruppe, also eine räumliche Gruppierung mehrerer LEDs gelten, wobei zwischen mehreren derartigen Gruppen oder Gruppierungen größere Abstände vorgesehen sein können. Damit können mit optimiertem Material- und Kostenaufwand besonders lange Lichtelement gefertigt werden, die an unterschiedlichen, räumlich voneinander beabstandeten Positionen jeweils eine zumindest im Wesentlichen homogene Beleuchtung ermöglichen und dabei beispielsweise nur einen Anschlusspunkt zur Energieversorgung benötigen. Damit werden vorteilhaft besonders flexible und vielseitige Anwendungsmöglichkeiten für das erfindungsgemäße Lichtelement eröffnet.

In weiterer vorteilhafter Ausgestaltung der vorliegenden Erfindung weist die Abdeckung in Lichtabstrahlrichtung, also in einer Lichtdurchtrittsrichtung, eine Materialstärke, also eine Dicke oder Ausdehnung, von wenigstens 3 mm oder von wenigstens 5 mm auf. Dies kann auch als Streudicke der Abdeckung bezeichnet werden. Die hier vorgeschlagene Ausgestaltung der Abdeckung beruht auf der Erkenntnis, dass mit einer derartigen Streudicke der Abdeckung vorteilhaft ein optimaler Kompromiss zwischen der Homogenität der Oberflächenhelligkeit der Abdeckung beziehungsweise des Lichtelements und einem Material- und Bauraumbedarf des Lichtelements erzielt werden kann. Je dicker die Abdeckung in der Lichtabstrahlrichtung oder Lichtdurchtrittsrichtung ist, desto stärker oder diffuser wird das Licht gestreut, insbesondere auch in Richtung jeweils benachbarter LEDs, sodass sich eine besonders gleichmäßige Überlagerung oder Überlappung von Lichtverteilungen der einzelnen LEDs ergibt.

In weiterer vorteilhafter Ausgestaltung der vorliegenden Erfindung sind die LEDs in mehreren elektrisch parallel zueinander geschalteten Segmenten oder Gruppen elektrisch angeschlossen. Jedes Segment, also jede Gruppe von zusammengeschalteten, also beispielsweise innerhalb des jeweiligen Segments seriell miteinander verbundenen, LEDs kann dann separat, also unabhängig von den anderen Segmenten oder Gruppen des Lichtelements geschaltet oder gesteuert werden. Jedes Segment kann dabei 1 bis N LEDs mit einer vorgegebenen natürlichen Zahl N umfassen. Durch eine derartige Verschaltung der LEDs kann vorteilhaft mit jeweils anwendungs- oder bedarfsgerecht angepasstem Aufwand eine flexible Steuerung des Lichtelements realisiert werden. Dadurch können vorteilhaft beispielsweise dynamische Effekte wie Animationen, scheinbar entlang der Längserstreckungsrichtung des Lichtelements durchlaufende Lichtpunkte oder Pulse oder dergleichen ebenso wie energiesparende Beleuchtungs- oder Betriebsmodi, in denen beispielsweise nur eine vorgegebene Auswahl an Segmenten mit Energie versorgt, also betrieben wird, ermöglicht werden.

Um beispielsweise eine nur abschnittsweise oder auf bestimmte entlang des Lichtelements angeordnete Strukturen oder Bauteile des jeweiligen Kraftfahrzeugs beschränkte Beleuchtung auf besonders einfache Weise realisieren zu können, können jeweils alle LEDs eines Segments oder einer Gruppe räumlich gruppiert angeordnet sein, sodass zwischen einer ersten oder vordersten und einer letzten oder hintersten LED eines Segments jeweils nur LEDs dieses Segments oder dieser Gruppe angeordnet sind. Alternativ können zwischen LEDs eines Segments eine oder mehrere LEDs eines oder mehrerer anderer Segmente angeordnet sein. Beispielsweise können LEDs zweier unterschiedlicher Segmente entlang der Reihe der LEDs alternierend angeordnet sein oder es können andere Gruppierungen oder Schaltungsmuster realisiert werden, um vorteilhaft bedarfsgerechte Licht- oder Beleuchtungseffekte erzielen zu können.

In weiterer vorteilhafter Ausgestaltung der vorliegenden Erfindung sind die LEDs durch das Gehäuse und die Abdeckung wasserdicht eingeschlossen. Dazu kann die Reihe der LEDs insgesamt allseitig von der Kombination aus Gehäuse und Abdeckung umgeben sein. Zusätzlich kann beispielsweise jede der LEDs von der Abdeckung eingeschlossen sein, sodass sich also auch zwischen zwei benachbarten LEDs Material der Abdeckung befinden kann. Dies kann beispielsweise durch Eingießen oder Vergießen der Reihe der LEDs mit dem Material der Abdeckung realisiert werden. Die Anschluss- oder Versorgungsleitung des Lichtelements kann durch das Gehäuse und/oder durch die Abdeckung ebenfalls wasserdicht hindurchgeführt sein, wofür gegebenenfalls eine zusätzliche Abdichtung vorgesehen sein kann. Sofern das Gehäuse aus mehreren Gehäuseteilen aufgebaut ist, können diese wasserdicht miteinander verbunden sein, beispielsweise mittels eines Klebers, einer Schweißverbindung, einer Gummi- oder Kunststoffdichtung und/oder dergleichen mehr.

Eine Befestigung oder entsprechende Befestigungsmittel, durch die die LEDs in oder an dem Gehäuse befestigt oder gehalten sind, können hier zu dem Gehäuse gezählt werden, also Teil des Gehäuses sein. Beispielsweise können die LEDs mittels eines wasserfesten Klebers an einer Wand des Gehäuses befestigt sein, wobei dieser Kleber gleichzeitig eine Dichtung bilden kann. Ebenso kann das flexible Gehäuse beispielsweise - zumindest während einer Phase der Herstellung - selbstklebend oder haftend sein, und auf diese Weise die LEDs halten. Ebenso können die LEDs im der Herstellung des Lichtelements beispielsweise zumindest teilweise in das flexible Gehäuse beziehungsweise in dessen Material eingelassen oder eingegossen und dadurch in oder an diesem gehalten sein. Bei entsprechender Stabilität kann ebenso durch entsprechende Ausformung des flexiblen Gehäuses und der LEDs bzw. eines LED-Streifens eine Verrastung oder Rastverbindung oder eine Steck- oder Clipsverbindung vorgesehen sein.

Die LEDs beziehungsweise ein diese umfassender LED-Streifen kann im Sinne der vorliegenden Erfindung die LEDs selbst meinen, aber beispielsweise ebenso eine jeweilige oder gemeinsame Platine, ein jeweilige oder gemeinsames Substrat, einen jeweiligen elektrischen Kontakt oder Anschlusspunkt und/oder dergleichen mehr begrifflich umfassen. In diesem Sinne kann der Begriff "LED" oder LED-Streifen hier demnach als oder im Sinne von LED-Anordnung aufgefasst werden.

Durch das wasserdichte Einschließen der LEDs ergeben sich vorteilhaft besonders flexible und vielfältige Einsatz- und Anordnungsmöglichkeiten des erfindungsgemäßen Lichtelements. Beispielsweise an das Lichtelement dadurch im Außenbereich an gegenüber Umwelteinflüssen exponierten Stellen des jeweiligen Kraftfahrzeugs angeordnet werden. Insbesondere ist dazu dann kein zusätzliches Gehäuse, kein Spritzschutz und/oder dergleichen mehr notwendig, wodurch vorteilhaft Material- und Fertigungsaufwand sowie Gewicht und Kosten eingespart werden können.

In weiterer vorteilhafter Ausgestaltung der vorliegenden Erfindung sind die LEDs an einer Innenseite des Gehäuses adhäsiv an diesem befestigt. Mit anderen Worten können die LEDs also mittels eines Klebers mit dem Gehäuse verbunden, das heißt an das Gehäuse angeklebt sein. Dadurch können die LEDs relativ zu dem Gehäuse fixiert, also positions- oder lagefest gehalten werden. Dies wiederum ermöglicht vorteilhaft eine besonders einfache Handhabung des erfindungsgemäßen Lichtelements, wenn es beispielsweise einer komplexen Form oder Kontur folgend in einem oder mehreren Bögen oder Kurven verlegt, also montiert wird. Auch in derartigen Fällen wird durch die Fixierung der LEDs relativ zu dem Gehäuse eine besonders präzise Anordnung oder Ausrichtung der LEDs oder Gruppen von LEDs relativ zu dem jeweiligen Kraftfahrzeug ermöglicht, wodurch eine jeweils beabsichtigte Licht- oder Beleuchtungswirkung auf besonders einfache Weise besonders zuverlässig und präzise erzielt werden kann. Die Verwendung eines Adhäsivs stellt dabei vorteilhaft eine besonders einfache, das heißt mit besonders geringem Fertigungsaufwand verbundene, und besonders kostengünstig realisierbare Fertigungsmöglichkeit für das Lichtelement dar.

In weiterer vorteilhafter Ausgestaltung der vorliegenden Erfindung sind die LEDs an einer Innenseite des Gehäuses mittels eines Ultraschall-Schweißverfahrens, also durch eine Ultraschall-Schweißverbindung oder - naht befestigt. Auch hier sind die LEDs damit relativ zu dem Gehäuse fixiert, sodass sich die gleichen Vorteile wie bei Verwendung eines Adhäsivs, also eines Klebers, ergeben. Durch die Ultraschall-Schweißverbindung kann vorteilhaft jedoch gegebenenfalls eine stabilere, zuverlässigere Verbindung ermöglicht werden, die zudem weniger anfällig gegen Umwelteinflüsse oder Alterungserscheinungen sein kann. Vorteilhaft kann das Ultraschall-Schweißverfahren hier ohne zusätzlichen Aufwand eingesetzt werden, da das Gehäuse ohnehin aus einem Kunststoffmaterial gefertigt und damit bereits selbst für das Ultraschall-Schweißen geeignet ist.

In weiterer vorteilhafter Ausgestaltung der vorliegenden Erfindung weisen die LEDs jeweils eine Konvertierungsschicht, insbesondere eine Phosphorschicht oder ein Phosphorelement, auf, die beziehungsweise das eine Wellenlänge von durchtretendem Licht verändert. Die Konvertierungsschicht ist hier also Teil der LEDs und wird dementsprechend ebenfalls von der Abdeckung abgedeckt. Damit tritt also von einem Halbleiterelement der LEDs ausgestrahltes Licht im Betrieb des Lichtelements zunächst in die Konvertierungsschicht ein, wird dort modifiziert und gelangt dann mit veränderter Wellenlänge in die Abdeckung und wird dort schließlich in die Umgebung des Lichtelements gestreut. Beispielsweise können hier LED-Chips, also Halbleiterelemente verwendet werden, die zunächst blaues Licht abstrahlen, das dann durch eine Phosphorschicht teilweise in gelbes Licht konvertiert wird, sodass insgesamt weißes oder weiß erscheinendes Licht abgestrahlt wird. Durch bedarfsgerechtes Anpassen einer Dicke der Konvertierungsschicht kann vorteilhaft ein Farbton oder eine Farbtemperatur des Lichtelements eingestellt werden, sodass das Lichtelement also durch minimale Anpassungen im Fertigungsprozess für verschiedene Anwendungen optimiert werden kann.

In weiterer vorteilhafter Ausgestaltung der vorliegenden Erfindung weist das Lichtelement mehrere unterschiedliche Arten von LEDs auf, die zum Ausstrahlen von Licht unterschiedlicher Wellenlängen ausgebildet sind. Mit anderen Worten können mittels der unterschiedlichen Arten von LEDs, also mittels entsprechend unterschiedlichen LEDs unterschiedliche Lichtfarben emittiert werden. Beispielsweise können weiß, rot, orange oder grün strahlende LEDs in dem Lichtelement angeordnet sein. Dabei können benachbarte LEDs von unterschiedlicher Art sein oder die unterschiedlichen Arten von LEDs können in benachbarten Gruppen oder Segmenten gruppiert oder gebündelt angeordnet sein. Ebenso kann eine einzelne LED aus mehreren Teil-LEDs unterschiedlicher Arten aufgebaut oder zusammengesetzt sein, also beispielsweise als RGB-LED ausgebildet sein. Auf diese Weise lassen sich vorteilhaft besonders flexibel und effektvoll unterschiedliche Licht- oder Leuchteffekte mittels des Lichtelements realisieren. Beispielsweise können damit mittels eines einzigen erfindungsgemäßen Lichtelements und damit also auf besonders effiziente, kosten- und bauraumsparende Weise unterschiedliche Funktionen oder Zustände des jeweiligen Kraftfahrzeugs oder individueller Komponenten oder Funktionen des Kraftfahrzeugs angezeigt oder repräsentiert oder verschiedene Lichtwirkungen erzielt werden.

Ein weiterer Aspekt der vorliegenden Erfindung ist ein Kraftfahrzeug, das wenigstens ein erfindungsgemäßes Lichtelement aufweist. Das erfindungsgemäße Kraftfahrzeug kann also insbesondere das im Zusammenhang mit dem erfindungsgemäßen Lichtelement genannte Kraftfahrzeug sein. Dementsprechend kann das erfindungsgemäße Kraftfahrzeug einige oder alle der im Zusammenhang mit dem erfindungsgemäßen Lichtelement genannten Eigenschaften, Merkmale und/oder Bauteile aufweisen. Das wenigstens eine Lichtelement kann also Teil einer Gesamtbeleuchtung des Kraftfahrzeugs sein. Bevorzugt kann das Lichtelement entlang einer gebogenen oder gewölbten, also komplex geformten, Freiform-Fläche oder Freiform-Kontur des Kraftfahrzeugs folgend an diesem angeordnet sein. Beispielsweise kann das Lichtelement ein Karosserieteil oder ein Innenausstattungselement des Kraftfahrzeugs umgeben, also einrahmen oder einfassen. Ebenso kann das Lichtelement beispielsweise ein Erkennungs- oder Identifizierungszeichen für das Kraftfahrzeug formen oder nachbilden, beispielsweise ein Logo einer Marke des Kraftfahrzeugs oder eines Herstellers oder Betreibers des Kraftfahrzeugs oder dergleichen mehr. Aufgrund der besonders einfachen Fertigung und Handhabbarkeit des Lichtelements kann dieses vorteilhaft besonders einfach bereits herstellerseitig während der Fertigung des Kraftfahrzeugs in diesem verbaut werden. Das wenigstens eine Lichtelement kann zumindest Teil einer Frontbeleuchtung des Kraftfahrzeugs sein oder diese bilden. Dazu kann das wenigstens eine Lichtelement beispielsweise als Abblendeinrichtung und/oder als Fernlichteinrichtung oder als Teil davon, insbesondere als Teil eines adaptiven Frontscheinwerfers, ausgebildet sein. Ebenso kann das wenigstens eine Lichtelement zumindest Teil einer Heck oder Seitenbeleuchtung des Kraftfahrzeugs sein.

In vorteilhafter Weiterbildung der vorliegenden Erfindung ist das wenigstens eine Lichtelement zumindest Teil einer Positionsleuchte, einer Rückleuchte, einer Tagfahrleuchte und/oder eines Fahrtrichtungsanzeigers des Kraftfahrzeugs ist. Es können also eine oder mehrere dieser Leuchten oder Lichteinrichtungen des Kraftfahrzeugs jeweils wenigstens ein erfindungsgemäßes Lichtelement aufweisen oder jeweils durch wenigstens ein erfindungsgemäßes Lichtelement gebildet sein. Diese Anwendungen des erfindungsgemäßes Lichtelement können besonders vorteilhaft sein, da aufgrund der Flexibilität des erfindungsgemäßes Lichtelements dieses optimal an eine Kontur des Kraftfahrzeugs angepasst sein kann, wodurch eine optimale Licht- oder Beleuchtungswirkung beziehungsweise eine optimale Sichtbarkeit und Erkennbarkeit des Kraftfahrzeugs für andere Verkehrsteilnehmer erreicht werden kann. Zusätzlich oder alternativ kann das erfindungsgemäßes Lichtelement zumindest als Teil anderer oder weiterer Leuchten des Kraftfahrzeugs - im Innenraum des Kraftfahrzeugs und/oder außen am Kraftfahrzeug - eingesetzt oder angeordnet sein oder werden.

Zu der Erfindung gehören auch Weiterbildungen des erfindungsgemäßen Kraftfahrzeugs, die Merkmale aufweisen, wie sie im Zusammenhang mit den Weiterbildungen des erfindungsgemäßen Lichtelements beschrieben sind und umgekehrt. Um unnötige Redundanz zu vermeiden, sind die entsprechenden Weiterbildungen hier nicht noch einmal für alle diese Aspekte der vorliegenden Erfindung separat beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine erste schematische Darstellung zur Veranschaulichung eines Aufbaus eines flexiblen Lichtelements;
- Fig. 2: eine zweite schematische Darstellung zur Veranschaulichung eines Aufbaus eines flexiblen Lichtelements;
- Fig. 3: eine dritte schematische Darstellung zur Veranschaulichung eines Aufbaus eines nicht erfindungsgemäßen flexiblen Lichtelements;
- Fig. 4: eine vierte schematische Darstellung zur Veranschaulichung eines Aufbaus eines erfindungsgemäßen flexiblen Lichtelements;
- Fig. 5: eine fünfte schematische Darstellung zur Veranschaulichung eines Aufbaus eines nicht erfindungsgemäßen flexiblen Lichtelements;
- Fig. 6: eine sechste schematische Darstellung zur Veranschaulichung eines Aufbaus eines nicht erfindungsgemäßen flexiblen Lichtelements;
- Fig. 7: eine schematische Darstellung eines aus mehreren flexiblen Lichtelementen nachgebildeten Logos; und
- Fig. 8: eine ausschnittweise schematische Perspektivdarstellung eines Kraftfahrzeugs mit mehreren flexiblen Lichtelementen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

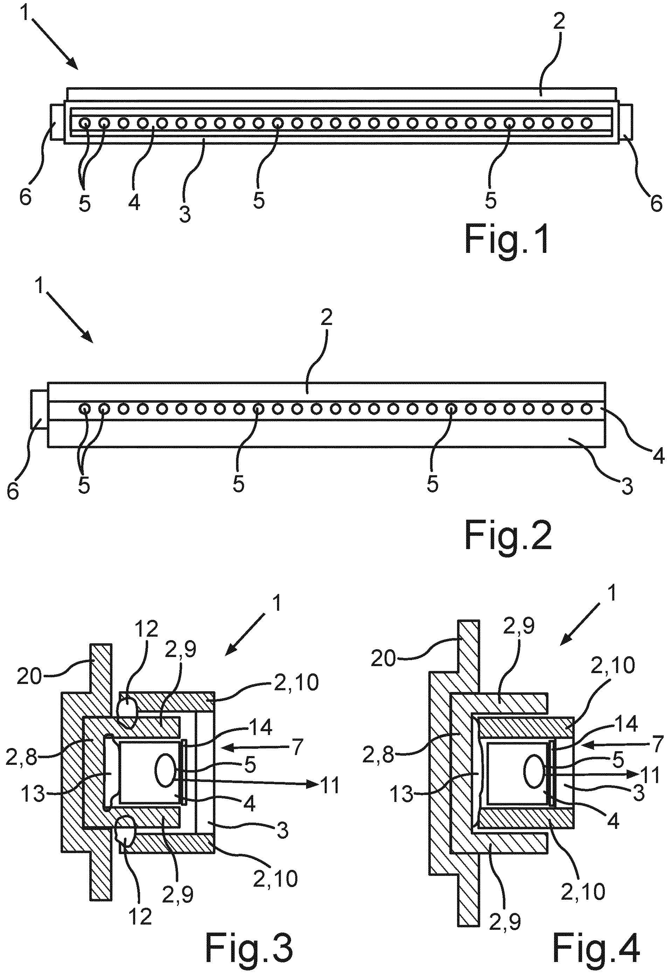

Fig. 1 zeigt eine erste schematische Darstellung zur Veranschaulichung eines Aufbaus eines Lichtelements 1 für den Fahrzeugbereich. Das Lichtelement 1 weist hier ein rudimentäres flexibles Gehäuse 2 auf, das beispielsweise eine Kunststoffblende als Trägerelement für weitere Bauteile des Lichtelements 1 sein kann. Das Gehäuse 2 ist hier aus einem flexiblen Kunststoffmaterial, wie etwa Silikon oder dergleichen, gefertigt, kann also beschädigungsfrei und reversibel in verschiedenen Biegungen, Krümmungen, Formverläufe, etc. gebracht werden. Auf einer Längsseite des Gehäuses 2 sind hier eine ebenfalls flexible Abdeckung 3 und ein LED-Streifen 4 angeordnet. Der LED-Streifen 4 umfasst eine Reihe von nebeneinander angeordneten LEDs 5, von denen hier der Übersichtlichkeit halber nur einige gekennzeichnet sind. Die Abdeckung 3 deckt den LED-Streifen 4 zumindest entlang einer offenen Längsseite 7 (siehe Fig. 3) des Gehäuse 2 ab, ist vorliegend jedoch beispielhaft als vollständige Ummantelung des LED-Streifens 4 ausgebildet. Dabei ist die Abdeckung 3 ebenso wie das Gehäuse 2 und der LED-Streifen 4 flexibel, also reversibel biegbar. Insbesondere auf einer Lichtabstrahlseite des LED-Streifens 4 beziehungsweise der LEDs 5 ist die Abdeckung 3 aus einem transluzenten Kunststoffmaterial gefertigt, das von den LEDs 5 ausgestrahltes Licht diffus streut. Beispielsweise kann der LED-Streifen 4 hier in Silikon eingegossen sein.

An Stirnseiten des Lichtelements 1 sind hier Steuergeräte 6 zur Ansteuerung der LEDs 5 angeordnet. Beispielhaft sind hier zwei Steuergeräte 6 vorgesehen, die zum Steuern unterschiedlicher Segmente des LED-Streifens 4, also unterschiedlicher Gruppen der LEDs 5 ausgebildet und eingerichtet sind.

Fig. 2 zeigt eine weitere schematische Darstellung zur Veranschaulichung eines Aufbaus eines teilweise dargestellten Lichtelements 1. Hier ist die Abdeckung 3 nur an einer dem Gehäuse 2 gegenüberliegenden Längsseite beziehungsweise der offenen Längsseite 7 des LED-Streifens 4 angeordnet. An einer Stirnseite des Lichtelements 1 ist auch hier ein Steuergerät 6 angeordnet, das vorliegend von der Abdeckung 3 bis zu dem Gehäuse 2 reicht und somit den dazwischen angeordneten LED-Streifen 4 stirnseitig abdeckt.

An einer gegenüberliegenden Stirnseite kann in entsprechender Weise ein weiteres Steuergerät 6 angeordnet sein oder werden. Ebenso kann dort der LED-Streifen 4 durch einen stirnseitigen Abschnitt der Abdeckung 3 und/oder des Gehäuses 2 abgedeckt, also gegen äußere Umwelteinflüsse oder dergleichen geschützt sein. Das Steuergerät 6 kann hier alle LEDs 5 gemeinsam ansteuern oder mehrere Anschlüsse zum individuellen Ansteuern mehrerer parallel geschalteter Segmente des LED-Streifens 4 beziehungsweise mehrerer Gruppen der LEDs 5 aufweisen.

Auch bei dieser Ausführungsform kann die Abdeckung 3 beispielsweise aus Silikon aber ebenso aus einem anderen transluzenten, diffus streuenden Kunststoffmaterial, beispielsweise einem 2K-Kunststoff gefertigt sein.

Das Lichtelement 1 kann an einem Teil eines Fahrzeugs sein oder werden, beispielsweise an einem Kühlergrill oder einem Kühlergrillrahmen, an einem Karosseriebauteils, an einem Innenverkleidungsteil und/oder dergleichen mehr. Das Lichtelement 1- kann beispielsweise ohne Zusatzteil direkt auf das jeweilige Teil des Fahrzeugs aufgebracht, beispielsweise aufgeklebt, eingeclipst, eingerastet oder (ultraschall-)verschweißt, werden.

Fig. 3 zeigt eine weitere schematische Darstellung eines Lichtelements 1 in einer vereinfachten quer zur Längserstreckungsrichtung, in der die LEDs 5 nebeneinander angeordnet sind, geschnittenen Ansicht. Das Gehäuse 2 weist hier eine Grundplatte 8 sowie zwei sich im Wesentlichen senkrecht von dieser weg zumindest im Wesentlichen parallel zueinander erstreckende Seitenwände oder Seitenteile 9 auf. Zudem weist das Gehäuse 2 hier zwei weitere Seitenteile 10 auf, die sich ebenfalls zumindest im Wesentlichen parallel zueinander und zu den Seitenteilen 9 entlang der Längserstreckungsrichtung des Lichtelements 1 erstrecken. Das Gehäuse 2 weist somit eine im Wesentlichen kanal- oder trogförmige Grundform auf und ist zu der offenen Längsseite 7 hin zunächst offen.

In einem von dem Gehäuse 2 derart auf drei Längsseiten umschlossenen Bereich oder Aufnahmevolumen ist hier der LED-Streifen 4 angeordnet. Der LED-Streifen 4 ist dabei derart ausgerichtet, dass eine Lichtabstrahlrichtung 11 der LEDs 5 jeweils lokal von der Grundplatte 8 weg und durch die offene Längsseite 7 hinaus in eine Umgebung des Lichtelements 1 weist.

Die offene Längsseite 7 des Gehäuses 2 ist hier durch die Abdeckung 3 verschlossen. Die weiteren Seitenteile 10 sind hier mit den Seitenteilen 9 über Verbindungen 12 dicht, insbesondere wasserdicht, verbunden. Die Verbindungen 12 können beispielsweise Klebestreifen oder Schweißnähte oder dergleichen sein.

Der LED-Streifen 4 ist hier durch eine Befestigung 13 an einer Innenseite der Grundplatte 8 befestigt. Die Befestigung 13 kann beispielsweise ebenfalls ein Klebestreifen, eine Reihe von Klebepunkten, eine Schweißnaht, eine Reihe von Schweißpunkten oder dergleichen sein.

Während in dem in Fig. 3 gezeigten Aufbau die weiteren Seitenteile 10 in Querrichtung des Lichtelements 1 außen angeordnet sind, also die Seitenteile 9 umgreifen, zeigt Fig. 4 einen weiteren, besonders einfachen Aufbau eines Lichtelements 1 in einer vereinfachten schematischen Querschnittansicht. Bei diesem vereinfachten Aufbau sind die weiteren Seitenteile 10, zwischen denen sich die Abdeckung 3 erstreckt, in Querrichtung innenseitig der Seitenteile 9 angeordnet. Die weiteren Seitenteile 10 sind hier ebenso wie der LED-Streifen 4 mittels der Befestigung 13 an der Grundplatte 8 gehalten. Dadurch kann vorteilhaft auf die Verbindungen 12 verzichtet und die Abdichtung des Raums oder Volumens, worin der LED-Streifen 4 aufgenommen ist, entsprechend vereinfacht werden.

Sowohl in Fig. 3 als auch in Fig. 4 ist schematisch und ausschnittweise ein Fahrzeugteil 20 - beispielsweise entsprechend dem oben genannten Teil des Fahrzeugs - dargestellt, an dem jeweils das Lichtelement 1 befestigt ist. Das Fahrzeugteil 20 - beispielsweise eines Kraftwagens 18 (siehe Fig. 9) - kann beispielsweise ein Stoßfängerüberzug, ein Kühlerschutzgitter, ein Seitenteil, eine Heckklappe, ein Leuchtengehäuse oder dergleichen mehr sein. Das Fahrzeugteil 20 kann also zumindest im Wesentlichen starr, also unflexibel sein. Zur Aufnahme oder Halterung des Lichtelements 1 bildet das Fahrzeugteil 2 hier eine Vertiefung aus, in die das Lichtelement 1 eingesetzt ist. Das Lichtelement 1 kann darin beispielsweise eingeklebt, eingeclipst, verrastet oder - bevorzugt mittels Ultraschallschweißen - eingeschweißt sein.

Unabhängig von dem gewählten Aufbau können der LED-Streifen 4 beziehungsweise die individuellen LEDs 5 eine Konvertierungsschicht 14 aufweisen, die in der Lichtabstrahlrichtung 11 vom eigentlichen Licht emittierenden Halbleiterelementen der LEDs 5 angeordnet ist.

Ebenso kann das Gehäuse 2, insbesondere die Grundplatte 8, bevorzugt innenseitig, metallisiert sein. Dadurch kann beispielsweise ein thermisches Verhalten des Lichtelements 1 verbessert und/oder durch Reflexionen eine nutzbare Lichtausbeute vergrößert werden. Zusätzlich oder alternativ kann beispielsweise eine dem Lichtelement 1 zugewandte Seite des Fahrzeugteils 20 entsprechend metallisiert sein.

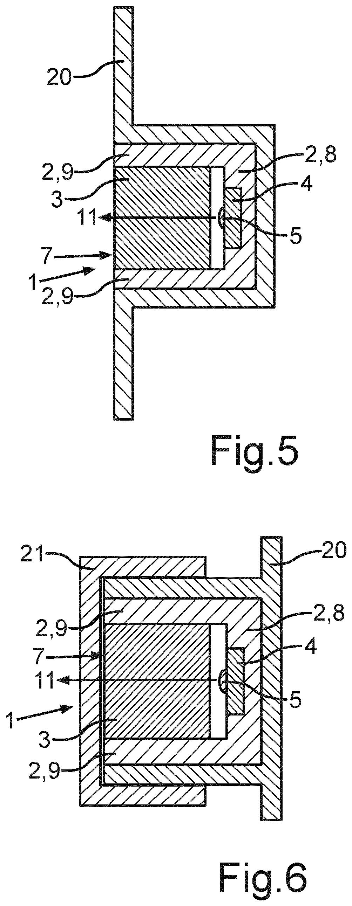

Fig. 5 zeigt eine weitere schematische Querschnittansicht des oder eines Lichtelements 1. Auch hier bildet das flexible Gehäuse 2 im Querschnitt eine, beispielhaft kastenförmige, Aufnahme, die zu der offenen Längsseite 7 hin offen ist. Der LED-Streifen 4 beziehungsweise die hier dargestellte LED 5 ist hier zumindest teilweise in das Material des flexiblen Gehäuses 2 eingelassen, eingesetzt oder eingegossen. In Richtung der offenen Längsseite 7 beziehungsweise in der Lichtabstrahlrichtung 11 ist der LED-Streifen 4 beziehungsweise die LED 5 auch hier durch die flexible Abdeckung 3 abgedeckt. Diese füllt hier beispielhaft das flexible Gehäuse 2 beziehungsweise die durch dieses gebildete Aufnahme zumindest größtenteils aus. Beispielhaft ist das Lichtelement 1 hier zumindest im Wesentlichen vollständig in die entsprechenden Ausformung des Fahrzeugteils 20 eingelassen, also in dieser zumindest im Wesentlichen bündig aufgenommen. Dadurch kann von außen, also etwa entgegen der Lichtabstrahlrichtung 11, betrachtet vorteilhaft eine besonders glatte und einheitliche Form oder Anmutung erzielt werden.

Fig. 6 zeigt eine weitere schematische Querschnittansicht des oder eines Lichtelements 1. Hier ist, ebenfalls rein beispielhaft, die Aufnahme oder Ausformung des Fahrzeugteils 20 aufbauend, also über eine Grundfläche des Fahrzeugteils 20 in der Lichtabstrahlrichtung 11 hinausragend, ausgebildet. Zudem ist hier außenseitig ein Schutzelement 21 angeordnet. Das Schutzelement 21 deckt das Lichtelement 1 in der Lichtabstrahlrichtung 11 beziehungsweise an der offenen Längsseite 7 gegenüber der Umgebung ab. Das Schutzelement 21 ist dabei insbesondere außenseitig der flexiblen Abdeckung 3 angeordnet, kann diese also beispielsweise gegenüber Umwelteinflüssen oder äußeren mechanischen Einflüssen und dementsprechend vor Beschädigungen schützen. Dazu kann das Schutzelement 21 bevorzugt starr ausgebildet sein, wodurch es vorteilhaft besonders stabil sein kann. Zumindest im Bereich der Abdeckung 3 ist das Schutzelement 21 transparent oder teiltransparent ausgebildet, sodass das von den LEDs 5 ausgestrahlte Licht durch das Schutzelement 21 hindurchtreten oder hindurchstrahlen kann. Das Schutzelement 21 kann vollständig in dieser Weise transparent oder teiltransparent ausgebildet sein oder ein entsprechendes transparentes oder teiltransparentes Fenster aufweisen, dass die Abdeckung 3 abgedeckt. Übrige, ein solches Fenster umgebende Teile des Schutzelement 21 können dann aus einem intransparenten Material gebildet sein, beispielsweise um eine noch weiter verbesserte Stabilität oder Schutzwirkung zu erzielen. Das Schutzelement 21 kann beispielsweise an dem flexiblen Gehäuse 2 oder - wie hier vorgesehen - an dem Fahrzeugteil 20 befestigt werden. Diese Befestigung kann beispielsweise durch Kleben, Clipsen, Verrasten, (Ultraschall)Schweißen und/der dergleichen mehr erfolgen. Sofern das Schutzelement 21 nicht wie hier beispielhaft dargestellt unmittelbar an dem Fahrzeugteil 20 anliegt, können zwischen dem Schutzelement 21 und dem Fahrzeugteil 20 entsprechende Verbindungen 12 beziehungsweise eine entsprechende Befestigung 13 vorgesehen werden, wie sie oben beschrieben sind.

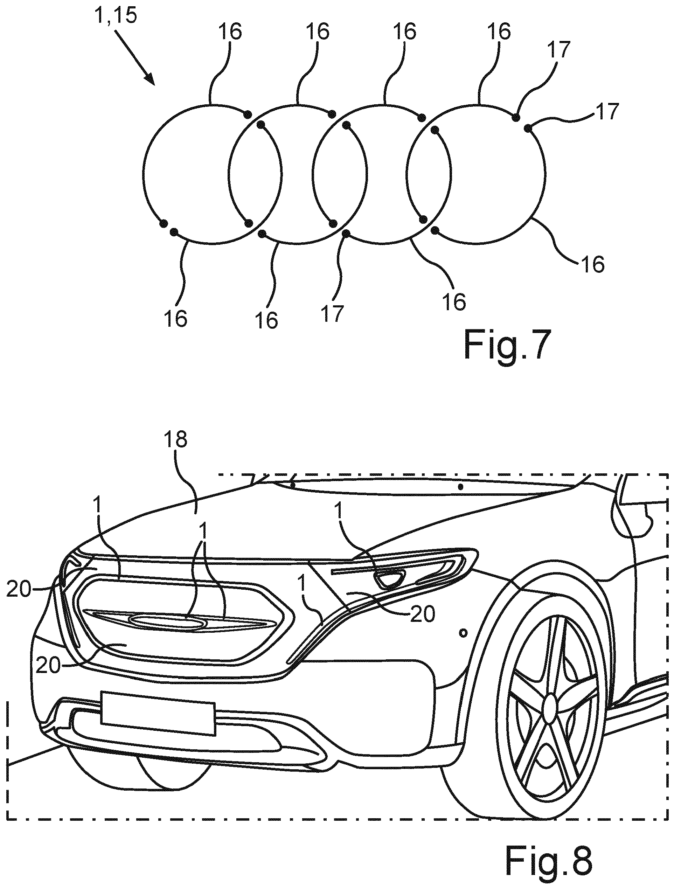

Fig. 7 zeigt eine schematische Darstellung eines Lichtelements 1, das vorliegend ein Logo 15 bildet oder nachbildet. Konkret ist das Logo 15 in Form von vier ineinandergreifenden Ringen aus mehreren Teilelementen 16 aufgebaut. Jedes der Teilelemente 16 kann individuell eines der beschriebenen Lichtelement 1 sein beziehungsweise entsprechend aufgebaut sein. Die Teilelemente 16 weisen endseitig jeweilige Anschlusspunkte 17 zur elektrischen Kontaktierung und Versorgung auf, von denen hier der Übersichtlichkeit halber nur einige gekennzeichnet sind.

Fig. 8 zeigt eine ausschnittweise schematische Perspektiv Darstellung eines Kraftwagens 18, der mit mehreren Lichtelementen 1 ausgestattet ist. Die Lichtelemente 1 sind hier beispielhaft zu verschiedenen komplexen Gestalten geformt. Dadurch wird veranschaulicht, dass die hier beschriebenen Lichtelemente 1 flexible selbstleuchtende Emitter der Lichtleisten bilden, die komplexe, lange, dünne Strukturen oder Konturen nachbilden oder lichttechnisch hervorheben können.

Unabhängig von der sonstigen konkreten Ausgestaltung kann Lichtelement 1 beziehungsweise die Abdeckung 3 zu Dekorations- oder Designzwecken verwendet werden, aber ebenso funktional eingesetzt werden. Beispielsweise kann das Lichtelement 1 beziehungsweise die Abdeckung 3 als Positionslicht, als Schlusslicht, als Fahrtrichtungsanzeiger, als Tagfahrlicht oder dergleichen mehr beziehungsweise als entsprechend zugehörige Lampe ausgebildet sein.

Auch wenn dies hier der Übersichtlichkeit halber jeweils nicht immer im Detail dargestellt ist, können einzelne Bauteile, Komponenten oder Anordnungen bei allen beschriebenen Varianten des Lichtelements 1 verwendete werden. Dies betrifft beispielsweise die Konvertierungsschicht 14 oder das Schutzelement 21.

Die einzelnen Bauteile oder Komponenten, die in den Figuren dargestellt sind, sind nicht notwendigerweise maßstabsgetreu abgebildet.

Insgesamt zeigen die beschriebenen Beispiele also, wie flexible selbstleuchtende Materialien zur Beleuchtung von komplexen Strukturen am Fahrzeug verwendet werden können.

## Patentansprüche

1. Lichtelement (1) für ein Kraftfahrzeug (18), aufweisend eine Reihe von nebeneinander angeordneten LEDs (4, 5) und eine flexible Abdeckung (3), welche die LEDs (4, 5) unter Verzicht auf ein zwischen den der Abdeckung (3) und den LEDs (4, 5) angeordnetes strahlformendes optisches Element zumindest auf deren Lichtabstrahlseite (11) abdeckt, wobei
das Lichtelement (1) ein länglich erstrecktes, zumindest an einer Längsseite (7) offenes Gehäuse (2) aufweist, das aus einem flexiblen Kunststoffmaterial gefertigt ist und in dem die Reihe der LEDs (4, 5) entlang einer Längserstreckungsrichtung des Gehäuses (2) mit der offenen Längsseite (7) zugewandter Lichtabstrahlseite (11) aufgenommen sind, wobei die Abdeckung (3) die offene Längsseite (7) des Gehäuses (2) verschließt und zum zumindest im Wesentlichen homogenen diffusen Streuen des von den LEDs (4, 5) abgestrahlten Lichts aus einem transluzenten Kunststoffmaterial gefertigt ist,
wobei das Gehäuse (2) eine Grundplatte (8) sowie zwei sich senkrecht von dieser weg parallel zueinander erstreckende Seitenteile (9) aufweist, und das Gehäuse (2) zwei weitere Seitenteile (10) aufweist, die sich ebenfalls parallel zueinander und zu den Seitenteilen (9) entlang der Längserstreckungsrichtung des Lichtelements (1) erstrecken,
**dadurch gekennzeichnet, dass** die weiteren Seitenteile (10), zwischen denen sich die Abdeckung (3) erstreckt, in Querrichtung innenseitig der Seitenteile (9) angeordnet sind, und die weiteren Seitenteile (10) ebenso wie die Reihe der LEDs (4, 5) mittels einer Befestigung (13) an der Grundplatte (8) gehalten sind.

2. Lichtelement (1) nach Anspruch 1,
**dadurch gekennzeichnet, dass**
ein Abstand zwischen jeweils zwei benachbarten LEDs (4, 5) zwischen 0,1 cm und 10 cm, bevorzugt weniger als 2 cm, beträgt.

3. Lichtelement (1) nach einem der vorhergehenden Ansprüche,
**dadurch gekennzeichnet, dass**
die Abdeckung (3) in Lichtabstrahlrichtung eine Materialstärke von wenigstens 3 mm oder von wenigstens 5 mm aufweist.

4. Lichtelement (1) nach einem der vorhergehenden Ansprüche,
**dadurch gekennzeichnet, dass**
die LEDs (4, 5) in mehreren elektrisch parallel zueinander geschalteten Segmenten elektrisch angeschlossen sind.

5. Lichtelement (1) nach einem der vorhergehenden Ansprüche,
**dadurch gekennzeichnet, dass**
die LEDs (4, 5) durch das Gehäuse (2) und die Abdeckung (3) wasserdicht eingeschlossen sind.

6. Lichtelement (1) nach einem der vorhergehenden Ansprüche,
**dadurch gekennzeichnet, dass**
die LEDs (4, 5) an einer Innenseite des Gehäuses (2) adhäsiv an diesem befestigt sind.

7. Lichtelement (1) nach einem der vorhergehenden Ansprüche,
**dadurch gekennzeichnet, dass**
die LEDs (4, 5) an einer Innenseite des Gehäuses (2) mittels eines Ultraschall-Schweißverfahrens befestigt sind.

8. Lichtelement (1) nach einem der vorhergehenden Ansprüche,
**dadurch gekennzeichnet, dass**
die LEDs (4, 5) jeweils eine Konvertierungsschicht (14), insbesondere eine Phosphorschicht (14), aufweisen, die eine Wellenlänge von durchtretendem Licht verändert.

9. Lichtelement (1) nach einem der vorhergehenden Ansprüche,
**dadurch gekennzeichnet, dass**
das Lichtelement (1) mehrere unterschiedliche Arten von LEDs (4, 5) aufweist, die zum Ausstrahlen von Licht unterschiedlicher Wellenlängen ausgebildet sind.

10. Kraftfahrzeug (18), aufweisend wenigstens ein Lichtelement (1) nach einem der vorhergehenden Ansprüche.

11. Kraftfahrzeug (18) nach Anspruch 10,
**dadurch gekennzeichnet, dass**
das wenigstens eine Lichtelement (1) zumindest Teil eines Frontscheinwerfers, einer Positionsleuchte, einer Rückleuchte, einer Tagfahrleuchte und/oder eines Fahrtrichtungsanzeigers des Kraftfahrzeugs (18) ist.

## Claims

1. A light element (1) for a motor vehicle (18), comprising a series of LEDs (4, 5) arranged next to each other, and a flexible cover (3), which covers the LEDs (4, 5) at least on the light emission side (11) thereof with omission of a beam-shaping optical element arranged between the cover (3) and the LEDs (4, 5), wherein
the light element (1) comprises a longitudinally extended housing (2) open at least on a longitudinal side (7), which is manufactured from a flexible plastic material and in which the series of the LEDs (4, 5) is accommodated along a longitudinal extension direction of the housing (2) with the light emission side (11) facing the open longitudinal side (7), wherein the cover (3) closes the open longitudinal side (7) of the housing (2) and is manufactured from a translucent plastic material for at least substantially homogenously diffusely scattering the light emitted from the LEDs (4, 5),
wherein
the housing (2) comprises a base plate (8) as well as two side parts (9) extending perpendicularly away from it parallel to each other, and the housing (2) comprises two further side parts (10), which also extend parallel to each other and to the side parts (9) along the longitudinal extension direction of the light element (1),
**characterized in that** the further side parts (10), between which the cover (3) extends, are arranged inside of the side parts (9) in transverse direction, and the further side parts (10) as well as the series of the LEDs (4, 5) are retained on the base plate (8) by means of an attachment (13).

2. The light element (1) according to claim 1,
**characterized in that**
a distance between each two adjacent LEDs (4, 5) is between 0.1 cm and 10 cm, preferably less than 2 cm.

3. The light element (1) according to any one of the preceding claims,
**characterized in that**
the cover (3) has a material thickness of at least 3 mm or of at least 5 mm in light emission direction.

4. The light element (1) according to any one of the preceding claims,
**characterized in that**
the LEDs (4, 5) are electrically connected in multiple segments electrically connected in parallel with each other.

5. The light element (1) according to any one of the preceding claims,
**characterized in that**
the LEDs (4, 5) are enclosed in waterproof manner by the housing (2) and the cover (3).

6. The light element (1) according to any one of the preceding claims,
**characterized in that**
the LEDs (4, 5) are adhesively attached to the housing (2) on an inner side thereof.

7. The light element (1) according to any one of the preceding claims,
**characterized in that**
the LEDs (4, 5) are attached to an inner side of the housing (2) by means of an ultrasonic welding method.

8. The light element (1) according to any one of the preceding claims,
**characterized in that**
the LEDs (4, 5) each comprise a conversion layer (14), in particular a phosphor layer (14), which changes a wavelength of light passing through.

9. The light element (1) according to any one of the preceding claims,
**characterized in that**
the light element (1) comprises multiple different types of LEDs (4, 5), which are formed for emitting light of different wavelengths.

10. A motor vehicle (18), comprising at least one light element (1) according to any one of the preceding claims.

11. The motor vehicle (18) according to claim 10,
**characterized in that**
the at least one light element (1) is at least part of a front headlight, a position lamp, a taillight, a daytime running lamp and/or a turn indicator of the motor vehicle (18).

## Revendications

1. Élément lumineux (1) pour un véhicule à moteur (18), comportant une série de LED (4, 5) disposées côte à côte et un couvercle souple (3) qui recouvre les LED (4, 5), dépourvu d'élément optique formant un faisceau disposé entre le couvercle (3) et les LED (4, 5), au moins sur leur côté d'émission de lumière (11),
l'élément lumineux (1) comportant un boîtier (2) ouvert sur au moins un côté longitudinal (72) et s'étendant longitudinalement, lequel boîtier étant fabriqué à partir d'une matière plastique souple et dans lequel sont reçues les LED de la série de LED (4, 5) le long d'une direction d'extension longitudinale du boîtier (2) avec le côté d'émission de lumière (11) dirigé vers le côté longitudinal ouvert (7), le couvercle (3) fermant le côté longitudinal ouvert (7) du boîtier (2) et étant fabriqué à partir d'une matière plastique translucide pour disperser la lumière émise par les LED (4, 5) de manière au moins sensiblement homogène et diffuse,
le boîtier (2) comportant une plaque de base (8) ainsi que deux parties latérales (9) s'étendant parallèlement l'une à l'autre et perpendiculairement en s'éloignant de celle-ci, et le boîtier (2) comportant deux parties latérales supplémentaires (10) qui s'étendent également parallèlement l'une à l'autre et aux parties latérales (9) le long de la direction d'extension longitudinale de l'élément lumineux (1),
**caractérisé en ce que** les parties latérales supplémentaires (10) entre lesquelles le couvercle (3) s'étend, sont disposées dans une direction transversale à l'intérieur des parties latérales (9), et les parties latérales supplémentaires (10) ainsi que la série de LED (4, 5) sont maintenues sur la plaque de base (8) au moyen d'une fixation (13).

2. Élément lumineux (1) selon la revendication 1,
**caractérisé en ce que**
une distance entre chaque deux LED (4, 5) adjacentes est comprise entre 0,1 cm et 10 cm, de préférence inférieure à 2 cm.

3. Élément lumineux (1) selon l'une des revendications précédentes,
**caractérisé en ce que**
le couvercle (3) a une épaisseur de matériau d'au moins 3 mm ou d'au moins 5 mm dans la direction d'émission de lumière.

4. Élément lumineux (1) selon l'une des revendications précédentes,
**caractérisé en ce que**
les LED (4, 5) sont électriquement connectées dans plusieurs segments électriquement raccordés en parallèle les uns aux autres.

5. Élément lumineux (1) selon l'une des revendications précédentes,
**caractérisé en ce que**
les LED (4, 5) sont enfermées par le boîtier (2) et le couvercle (3) de manière étanche à l'eau.

6. Élément lumineux (1) selon l'une des revendications précédentes,
**caractérisé en ce que**
les LED (4, 5) sont fixées de manière adhésive au boîtier (2) sur un côté intérieur de celui-ci.

7. Élément lumineux (1) selon l'une des revendications précédentes,
**caractérisé en ce que**
les LED (4, 5) sont fixées sur un côté intérieur du boîtier (2) au moyen d'un procédé de soudage par ultrasons.

8. Élément lumineux (1) selon l'une des revendications précédentes,
**caractérisé en ce que**
les LED (4, 5) comportent respectivement une couche de conversion (14), en particulier une couche de luminophores (14), qui fait varier une longueur d'onde de lumière passant au travers.

9. Élément lumineux (1) selon l'une des revendications précédentes,
**caractérisé en ce que**
l'élément lumineux (1) comporte plusieurs différents types de LED (4, 5) conçus pour émettre de la lumière de différentes longueurs d'onde.

10. Véhicule à moteur (18) comportant au moins un élément lumineux (1) selon l'une des revendications précédentes.

11. Véhicule à moteur (18) selon la revendication 10,
**caractérisé en ce que**
le au moins un élément lumineux (1) est au moins une partie d'un phare avant, d'un feu de position, d'un feu arrière, d'un feu diurne et/ou d'un feu indicateur de direction du véhicule à moteur (18).
